# EUROPÄISCHE PATENTANMELDUNG

(11) **EP 0 757 946 A2**
(43) Veröffentlichungstag der Anmeldung: **12.02.1997**
(21) Anmeldenummer: 96111133.3
(22) Anmeldetag: 11.07.1996
(51) Int. Cl.: B60R 21/02, B60R 21/09, B62D 1/18

(54) **Sicherheitseinrichtung, insbesondere für den Fahrer eines Kraftfahrzeuges**

(30) Priorität: 05.08.1995 DE 19528876
(71) Anmelder: Volkswagen Aktiengesellschaft, 38436 Wolfsburg (DE)
(72) Erfinder: Poweleit, Udo, 38465 Brome (DE); Vaz, Paulo, 38465 Brome (DE); Viehweger, Hans, Dipl.-Ing., 38550 Isenbüttel (DE); Heinemann, Olaf, 38448 Wolfsburg (DE)

(57) **Zusammenfassung**

Die Erfindung betrifft eine Sicherheitseinrichtung, insbesondere für den Fahrer eines Kraftfahrzeugs mit einem einen Knieaufprall aufnehmenden Cockpitelement, das als Ersatz für einen Fahrzeugquerträger und zur Abstützung der Lenkung und gegebenenfalls auch der Lagerung der Pedale dient. Sie löst die Aufgabe, eine derartige Sicherheitseinrichtung mit einfachen mechanischen Mitteln so auszubilden, daß diese sowohl den bestmöglichen Schutz für die Knie der vorderen Fahrzeuginsassen als auch für die unteren Extremitäten des Fahrers bietet und die bei einem Frontalaufprall eine Lenkradstellung bewirkt, durch die die Verletzungsgefahr für den Fahrer minimiert ist. Dazu weist das Cockpitelement 1 eine mit der Stirnwand 7 verbundene Halterung 3 auf, die bei einer Beaufschlagung des Cockpitelementes 1 an einer Knieaufprallfläche 2 eine Schwenkbewegung zur Stirnwand 7 des Fahrzeug hin ausführt und an der die Lenksäule 4 geführt und an der ein Ansatz 5 angeordnet ist, der entweder die Pedale 6 gelenkig haltert oder mit einer Stoßfläche 8 für an der Stirnwand 7 angeordnete Pedale 6a ausgestattet ist.

## Beschreibung

Die Erfindung betrifft eine Sicherheitseinrichtung, insbesondere für den Fahrer eines Kraftfahrzeuges, nach dem Oberbegriff des Anspruchs 1.

Eine gattungsgemäße Sicherheitseinrichtung ist aus der DE 21 51 599 C2 bekannt. Diese weist innerhalb einer Armaturentafel im Aufprallbereich der Knie von Fahrer und Beifahrer ein Deformationselement auf, das sich in etwa geradlinig über die gesamte Fahrzeugbreite erstreckt und als Knierückhalteelement mit einem auf der dem Fahrzeuginnenraum zugekehrten Seite gerundeten Profil ausgebildet ist. Das Deformationselement wird gleichzeitig zur Abstützung der Lenkung und/ oder Lagerung der Pedalerie genutzt. Eine am Deformationselement gelagerte Pedalerie wird bei einem Frontalaufprall jedoch nur translatorisch verschoben und nicht von den Füßen des Fahrers fortbewegt. Bei einer an der Stirnwand gelagerten Pedalerie ist bei einem Frontalaufprall durch die mit diesem einhergehende Intrusion der Wand damit zu rechnen, daß die Pedalerie in Richtung des Fahrzeuges bewegt wird und somit insbesondere die unteren Extremitäten des Fahrers erheblich gefährdet sind.

Die DE 4415642 A1 hat eine Pedalanordnung für ein Kraftfahrzeug mit einer einen Motorraum von einer Fahrerzelle trennenden Stirnwand und einen an der Stirnwand befestigten Lagerbock für wenigstens einen Pedalhebel zum Gegenstand, bei dem die Stirnwand einen Sollknickbereich aufweist. Dieser ist so ausgelegt, daß die Pedalhebel bei einer durch einen Frontalaufprall bewirkten Beaufschlagung der Stirnwand vom Fahrer fortbewegt werden.

Des weiteren sei noch die DE 4438233 A1 angeführt, die eine Sicherheitslenksäulenanordnung zum Gegenstand hat, die bei einer Verringerung des Abstandes zwischen der Stirnwand des Fahrzeuges und dem oberen Lenksäulenlager bei einer teleskopierenden Lenksäule eine vorgegebene Lenkradposition sicherstellt. Die Einrichtung weist als wesentlichen Bestandteil ein durch eine unfallbedingte Relativbewegung zwischen der Stirnwand und dem oberen Lenksäulenlager aktivierbares Stellglied (Knick- oder Schwenkhebel) auf, durch das mittels eines Übertragungsgliedes (Zugseil) der obere Lenksäulenteil bei Überschreitung einer vorgegebenen, von dem Stellglied ausgehenden Betätigungskraft gegenüber der Stirnwand verstellbar ist.

Es ist Aufgabe der Erfindung, eine Sicherheitseinrichtung der eingangs genannten Art zu schaffen, bei der mit einfachen mechanischen Mitteln der Insassenschutz im Fahrzeug weiter verbessert wird.

Diese Aufgabe wird gelöst mit einer Sicherheitseinrichtung gemäß den Merkmalen des Patentanspruchs 1. Erfindungsgemäß ist also das als Knieaufprallschutz ausgeführte Cockpitelement mit der Lenksäule und/oder einem wenigstens ein Pedal aufweisenden Pedalwerk in der Weise wirkverbunden, daß aus der Knieaufprallbewegung eine Betätigungskraft zur Verlagerung der Lenksäule und/oder des Pedalwerkes gewonnen wird. Es wird somit ein bestmöglicher Schutz sowohl für die Knie eines vorderen Fahrzeuginsassen als auch für die unteren Extremitäten, insbesondere für den Fuß- und Knöchelbereich, gewährleistet. Darüber hinaus wird auch die Möglichkeit eröffnet, die von einem Lenkrad in einer Unfallsituation ausgehende Verletzungsgefahr herabzusetzen.

Gemäß einer besonders vorteilhaften Weiterbildung der Erfindung weist das als Knieaufprallschutz dienende Cockpitelement eine mit der Stirnwand und der Lenksäule verbundene Halterung auf, die bei einer Beaufschlagung des Cockpitelementes durch einen Knieaufprall eine Schwenkbewegung zur Stirnwand hin ausführt. Außerdem werden an der Stirnwand angeordnete Pedale entweder durch die Halterung in Richtung auf die Stirnwand beaufschlagt oder sind so an der Halterung angeordnet, daß sie mit dieser zur Stirnwand geschwenkt werden.

Der Vorteil dieser Sicherheitseinrichtung liegt demnach darin, daß bei einem Frontalaufprall auftretende Kräfte für positive Bewegungsabläufe genutzt werden, indem durch eine Knieaufprall-Beaufschlagung des Cockpitelementes eine den Knieaufprall aufnehmende Schwenkbewegung des Cockpitelementes ausgelöst wird, die zugleich eine Schwenkbewegung des Lenkrades nach unten und eine Schwenkbewegung der Pedale nach vorn oder eine Beaufschlagung derselben in Richtung auf die Stirnwand verursacht.

Ein weiterer wesentlicher Vorteil dieser Sicherheitseinrichtung besteht darin, daß sie als eigenständiges Modul komplett vormontierbar ist. Überdies ist sie fahrzeugtypunabhängig und an die jeweiligen Innenraumverhältnisse anpaßbar.

Die Maßnahme nach Anspruch 3 trägt in vorteilhafter Weise dazu bei, daß die Schwenkbewegung der Lenksäule und der Pedale in einer vorbestimmten Weise definiert erfolgen kann.

Dadurch, daß das Cockpitelement nach Anspruch 4 an einem Modulträger angeordnet werden kann, ergeben sich technologische Vorteile für die Montage der Sicherheitseinrichtung als eigenständiges Modul, vor allem auch in Verbindung mit dem im Anspruch 6 aufgeführten Merkmal.

Durch die Ausbildung eines zur Stirnwand weisenden Ansatzes an der Halterung wird auf einfache Weise eine bedienungsgerechte Anordnungsmöglichkeit für die Pedale bei gleichzeitiger Schwenkmöglichkeit im Crashfall bzw. ein Beaufschlagungselement für an der Stirnwand oder gemäß dem Anspruch 5 am Modulträger angeordnete Pedale geschaffen.

Das im Anspruch 6 aufgeführte Merkmal trägt zu einer Verbesserung der Aufnahme der Aufprallenergie durch das Cockpitelement bei und dient überdies dem Leichtbau des Fahrzeuges.

Die Erfindung wird nachstehend an zwei Ausführungsbeispielen näher erläutert. In der zugehörigen Zeichnung zeigen:
- Fig. 1:: Eine erfindungsgemäße Sicherheitseinrichtung mit am Cockpitelement angelenkter Pedalerie, schematisch, und
- Fig. 2:: eine erfindungsgemäße Sicherheitseinrichtung mit an der Stirnwand gelagerter Pedalerie, schematisch.

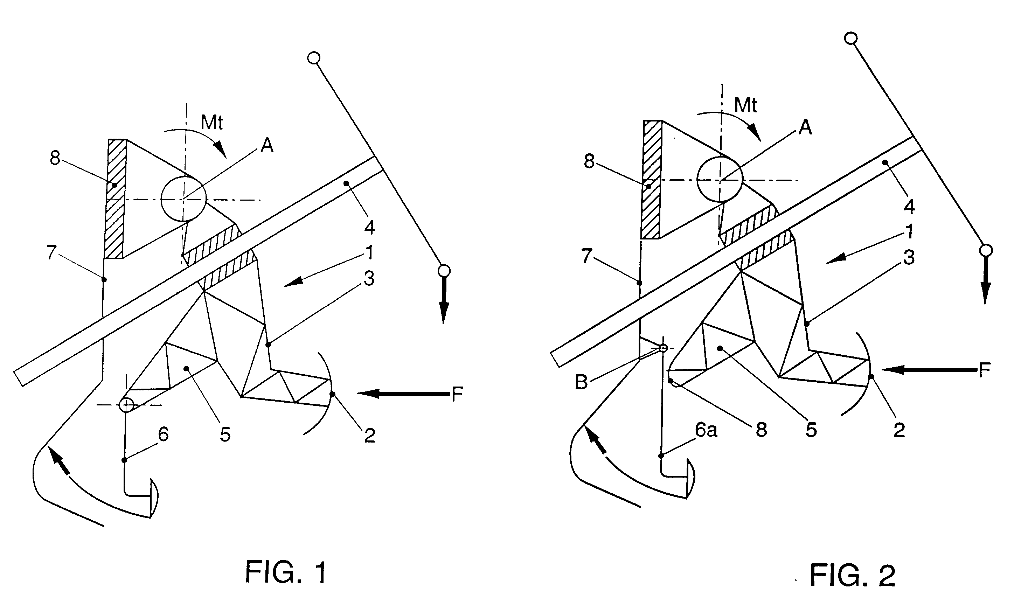

Die in Fig. 1 schematisch dargestellte Sicherheitseinrichtung weist ein Cockpitelement 1 mit einer einen Knieaufprall aufnehmenden gerundeten Knieaufprallfläche 2 und einer Halterung 3, eine in der Halterung 3 geführte Lenksäule 4 und an einem Ansatz 5 angelenkte Pedale 6 auf. Die Halterung ist hier in Gerüstbauweise ausgeführt und bei A gelenkig mit einem an der Stirnwand 7 angeordneten Modulträger 8 verbunden. Wird das Cockpitelement 1 bei einem Frontalaufprall an der Knieaufprallfläche 2 durch die Kraft F beaufschlagt, wird dieses um die Achse A in Richtung auf die Stirnwand 7 zu verschwenkt (Mt).

Die Lenksäule 4 und die Pedale 6 führen infolge ihrer Anordnung an der Halterung 3 bzw. am Ansatz 5 der Halterung 3 diese Schwenkbewegung mit aus, was bedeutet, daß die Lenksäule 4 nach unten (Pfeilrichtung) in eine den Fahrer weniger gefährdende Position und die Pedale 6 von den unteren Extremitäten des Fahrers weg (Pfeilrichtung) bewegt werden. Damit ist die Verletzungsgefahr für den Fahrer bei einem Frontalaufprall erheblich reduziert.

Die Ausführung gemäß Fig. 2 unterscheidet sich von der beschriebenen dadurch, daß die Pedale 6a an der Stirnwand 7 bei B angelenkt sind. Der Ansatz 5 ist für den Fall eines Frontalaufpralles als Beaufschlagungselement für die Pedale 6a ausgebildet und weist an seinem freien Ende eine Stoßfläche 8 für diese auf. Im Beaufschlagungsfall (F) wird bei dieser Ausführung das Cockpitelement 1 wie bei der oben beschriebenen Ausführung zusammen mit der Lenksäule 4 um die Achse A verschwenkt. Dabei trifft der Ansatz 5 der Halterung 3 mit der Stoßfläche 8 auf die Pedale 6a und schwenkt diese in Richtung auf die Stirnwand 7, d.h. von den unteren Extremitäten des Fahrers weg.

## Patentansprüche

1. Sicherheitseinrichtung, insbesondere für den Fahrer eines Kraftfahrzeugs, mit
- einem Cockpitelement (1), das wenigstens eine dem Fahrzeuginnenraum zugewandte Knieaufprallfläche aufweist und als Fahrzeugquerträger ausgebildet oder an einem solchen zumindest mittelbar befestigt ist,
- einer Lenksäule (4), die zumindest mittelbar mit dem Fahrzeugquerträger verbunden ist,
- einem Pedale (6) aufweisenden Pedalwerk, das an dem Fahrzeugquerträger oder an einer Stirnwand (7) des Fahrzeugs, gegebenenfalls über einen Lagerbock, zumindest mittelbar gehalten ist,
dadurch gekennzeichnet, daß
- das Cockpitelement (1) mit der Lenksäule (4) und/oder dem Pedalwerk in der Weise wirkverbunden ist, daß bei einem Knieaufprall
= die Lenksäule (4) aus einem potentiellen Kopfaufschlagbereich, vorzugsweise durch eine nach unten gerichtete Verlagerung, herausbewegbar ist,
und/oder
= wenigstens eines der Pedale (6) durch eine Schwenkbewegung und/oder ein von dem Cockpitelement (1) betätigtes Beaufschlagungselement in Richtung auf die Stirnwand (7) zu bewegbar ist.

2. Sicherheitseinrichung nach Anspruch 1, dadurch gekennzeichnet, daß das Cockpitelement (1) eine mit der Stirnwand (7) und der Lenksäule (4) verbundene und bei einer Beaufschlagung desselben eine Schwenkbewegung zur Stirnwand (7) hin vollführende Halterung (3) aufweist, und daß die Halterung (3) zugleich Anordnungselement für die Pedale (6) oder Beaufschlagungselement für an der Stirnwand (7) angeordnete Pedale (6a) bei einem Knieaufprall ist.

3. Sicherheitseinrichtung nach Anspruch 2, dadurch gekennzeichnet, daß die Halterung an (3) an einem an der Stirnwand (7) angeordneten Modulträger (8) angeordnet ist.

4. Sicherheitseinrichtung nach Anspruch 1, 2 oder 3, dadurch gekennzeichnet, daß die Halterung (3) einen in Richtung auf die Stirnwand (7) ausgebildeten und als Hebel dienenden Ansatz (8) für die Pedale (6; 6a) aufweist.

5. Sicherheitseinrichtung nach Anspruch 4, dadurch gekennzeichnet, daß der Ansatz (8) die Pedale (6) drehgelenkig gelagert trägt oder als Beaufschlagungselement für die Pedale (6a) ausgebildet ist.

6. Sicherheitseinrichtung nach Anspruch 1, dadurch gekennzeichnet, daß die an der Stirnwand (7) angeordneten Pedale (6a) an dem Modulträger (8) angeordnet sind.
